# EUROPÄISCHE PATENTSCHRIFT

(11) **EP 0 355 486 B1**
(45) Veröffentlichungstag und Bekanntmachung des Hinweises auf die Patenterteilung: **06.10.1993**
(21) Anmeldenummer: 89114124.4
(22) Anmeldetag: 31.07.1989
(51) Int. Cl.: G01M 1/16, G01M 1/28

(54) **Verfahren zum Bestimmen der Unwucht von am Kraftfahrzeug montierten Kraftfahrzeugrädern**
Method to determine the unbalance of vehicle wheels mounted on a motor vehicle
Procédé de détermination du balourd de roues montées sur un véhicule

(30) Priorität: 23.08.1988 DE 3828611
(43) Veröffentlichungstag der Anmeldung: 28.02.1990
(73) Patentinhaber: Beissbarth GmbH, 80993 München (DE)
(72) Erfinder: Bux, Hermann, D-8134 Pöcking-Possenhofen (DE); Ross, Peter, D-8000 München 50 (DE)
(74) Vertreter: Kirschner, Klaus Dieter, Dipl.-Phys.

(56) Entgegenhaltungen:
- GB-A- 2 153 095

## Beschreibung

Die Erfindung betrifft ein Verfahren zum Bestimmen der Unwucht von am Kraftfahrzeug montierten Kraftfahrzeugrädern, bei dem das Rad angetrieben, die Drehzahl erfaßt und die Unwucht nach Größe und Richtung gemessen und angezeigt wird.

Bei derartigen Meßverfahren ist es bisher üblich, das zu wuchtende Rad auf eine Drehzahl anzutreiben, die einer Kraftfahrzeuggeschwindigkeit zwischen 100 und 140 km/h entspricht. Dabei wird angenommen, daß bei einer Drehzahl in diesem Bereich ausreichend gute Unwuchtsignale ermittelt werden können. Beim Wuchten am Kraftfahrzeug werden die Unwuchtsignale der Räder durch Eigenschwingungen des Kraftfahrzeuges überlagert. Daher ist die optimale Drehzahl für das Wuchten von Kraftfahrzeug zu Kraftfahrzeug verschieden. Dieser Tatsache wurde bisher nicht Rechnung getragen, vielmehr ging man davon aus, daß die Eigenschwingungen des Kraftfahrzeuges bei den oben angegebenen Drehzahlen nicht mehr relevant sind.

Der Erfindung liegt demgegenüber die Aufgabe zugrunde, ein Verfahren zur Bestimmung der Unwucht von am Kraftfahrzeug montierten Rädern dahingehend zu verbessern, daß die Unwuchtmessung an dem Kraftfahrzeug mit einer solchen Drehzahl durchgeführt wird, bei der das Unwuchtgebersignal optimal bzw. die Störungen der Kraftfahrzeugeigenschwingungen minimal sind.

Zur Lösung dieser Aufgabe ist das erfindungsgemäße Verfahren dadurch gekennzeichnet, daß das Rad in einem Meßlauf derart angetrieben wird, daß seine Drehzahl einen Drehzahlbereich durchläuft, daß beim Meßlauf Unwuchtgebersignale in bezug auf ihre Güte analysiert werden, und daß das Ergebnis der Analyse angezeigt wird. Durch dieses Verfahren ist der Bedienungsperson ein Mittel an die Hand gegeben, die Messung bei der optimalen Drehzahl für das betreffende Kraftfahrzeug durchzuführen.

Alternativ ist ein erfindungsgemäßes Verfahren zur Lösung dieser Aufgabe dadurch gekennzeichnet, daß das Rad in einem Meßlauf derart angetrieben wird, daß seine Drehzahl einen Drehzahlbereich durchläuft, daß beim Meßlauf Unwuchtgebersignale in bezug auf ihre Güte analysiert werden, und daß mit dem Ergebnis der Analyse die Auswertung der Unwuchtsignale gesteuert wird. Durch diese Ausgestaltung wird das Meßverfahren automatisiert und damit für die Bedienungsperson vereinfacht.

Alternativ ist ein erfindungsgemäßes Verfahren zur Lösung dieser Aufgabe dadurch gekennzeichnet, daß das Rad in einem Meßlauf derart angetrieben wird, daß seine Drehzahl einen Drehzahlbereich durchläuft, daß bei verschiedenen Drehzahlen die Unwucht gemessen wird, und daß die Drehzahl und die zugehörige Unwucht in Form von Unwuchtsignalen oder in Form von Unwuchtgröße und Unwuchtrichtung abgespeichert und nach Beendigung des Meßlaufes statistisch ausgewertet werden.

Aus der Auswertung der Unwuchtmessungen bei verschiedenen Drehzahlen kann sowohl eine Information über Drehzahlbereiche, in denen bei einem bestimmten Kraftfahrzeugtyp optimale Unwuchtmessungen durchgeführt werden können, also auch eine Information über die Unwucht selbst abgeleitet werden. Hat man für einen bestimmten Kraftfahrzeugtyp einen bestimmten Drehzahlbereich festgestellt, in dem die bei diesem Kraftfahrzeugtyp guten Unwuchtmeßergebnisse erzielt werden, so genügt es in den meisten Fällen, andere Kraftfahrzeuge desselben Typs ebenfalls in diesem Drehzahlbereich zu messen. Es gibt jedoch auch einige Fälle, bei denen dieser Kraftfahrzeugtyp in dem vorherbestimmten Drehzahlbereich keine befriedigenden Ergebnisse liefert. In diesem Fall müssen die Drehzahlbereiche neu bestimmt werden, in denen dieses spezielle Kraftfahrzeug befriedigende Ergebnisse liefert. Bei Anwendung des erfindungsgemäßen Verfahrens ist es daher möglich, bei den verschiedensten Kraftfahrzeugtypen und auch bei Ausnahmefällen eines speziellen Kraftfahrzeugtyps noch befriedigende Wuchtergebnisse zu erzielen.

Weitere vorteilhafte Ausgestaltungen des erfindungsgemäßen Verfahrens ergeben sich aus den restlichen Unteransprüchen.

Ausführungsbeispiele der Erfindung werden nun anhand der beiliegenden Zeichnungen beschrieben. Es zeigen:
- Fig. 1: ein Blockschaltbild einer Schaltung zur Durchführung einer Ausführungsform des erfindungsgemäßen Verfahrens;
- Fig. 2: ein Anzeigenfeld zur Anzeige der Meßergebnisse;
- Fig. 3: ein abgewandeltes Detail des Anzeigenfeldes nach Fig. 2;
- Fig. 4: ein Blockschaltbild einer Schaltung zur Durchführung einer anderen Ausführungsform des erfindungsgemäßen Verfahrens;
- Fig. 5: ein weiteres Blockschaltbild einer Schaltung für die Durchführung einer weiteren Ausführungsform des erfindungsgemäßen Verfahrens; und
- Fig. 6: ein weiteres Blockschaltbild einer Schaltung für die Durchführung einer weiteren Ausführungsform des erfindungsgemäßen Verfahrens.

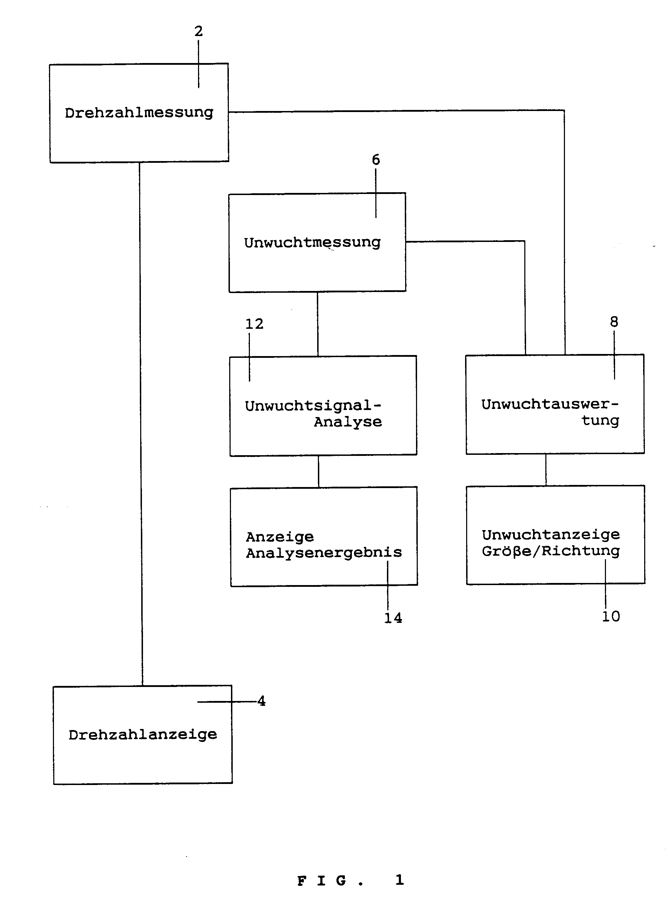

Gemäß Fig. 1 ist eine Drehzahlmeßschaltung 2 vorgesehen, die während eines Meßlauf die Drehzahl mißt und ein entsprechendes Drehzahlsignal an die Drehzahlanzeigeeinrichtung 4 abgibt, in der die Drehzahl angezeigt wird. Die Unwuchtmessung erfolgt über einen Unwuchtgeber 6, dessen Ausgangssignal zusammen mit dem Drehzahlsignal an eine Auswertungschaltung 8 abgegeben wird, in der die Unwuchtauswertung erfolgt, indem die Unwucht nach Größe und Richtung bestimmt wird. Die Ausgangssignale der Auswertungseinrichtung 8 gelangen an eine Unwuchtanzeigeeinrichtung 10, in der die Unwucht nach Größe und Richtung angezeigt wird. Die Ausgangssignale von dem Unwuchtgeber 6 werden an eine Analysatorschaltung 12 abgegeben, in der die Unwuchtgebersignale auf ihre Güte analysiert werden. Die Ausgangssignale der Analysatorschaltung 12 gelangen an eine Güte-Anzeigeeinrichtung 14, in der eine Anzeige der Güte der Unwuchtgebersignale erfolgt.

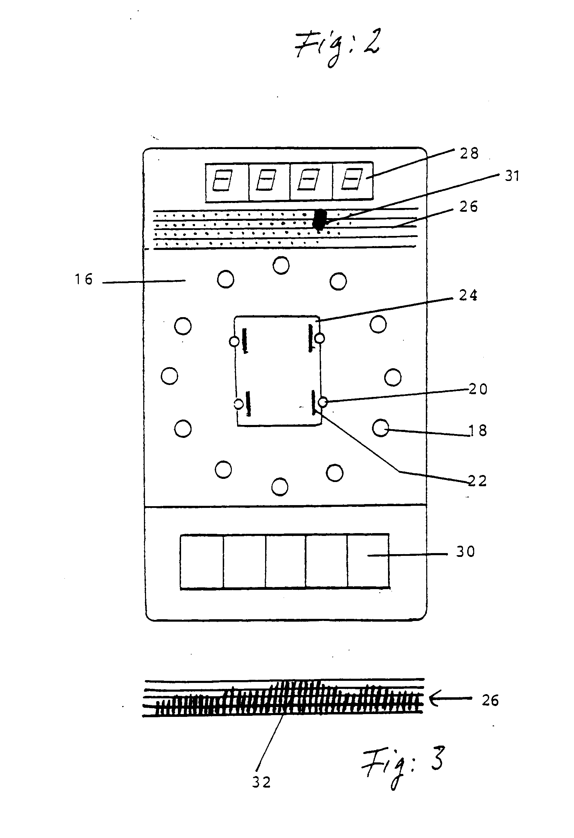

Fig. 2 zeigt ein Beispiel für eine Anzeigetafel 16, auf der LCD-Anzeigen angeordnet sind, um die gemäß Fig. 1 zur Anzeige gelangenden Meß- und Auswertungsergebnisse anzuzeigen. Zifferblattähnlich angeordnete Punkte 18 dienen zur Anzeige der Unwuchtrichtung. Anzeigepunkte 20, die an schematisch dargestellten Rädern 22 eines ebenfalls schematisch dargestellten Kraftfahrzeuges 24 liegen, zeigen an, welches Rad gerade gemessen wird. Eine Strichanzeige 26 ist vorgesehen, um die Güte des Unwuchtgebersignals anzuzeigen, wobei in diesem Fall eine erhöhte Güte dadurch angezeigt wird, daß, von links beginnend, eine größere Anzahl von Anzeigestrichen in Richtung nach rechts aufleuchtet, um den Drehzahlbereich von 0 bis max. anzuzeigen und für die optimale Drehzahl eine Marke 31 einzublenden (Fig. 2).

Eine weitere Möglichkeit der optimalen Drehzahlanzeige wird durch aneinandergereihte senkrechte Striche 32 dargestellt, die höchsten Striche stellen die erhöhte Güte dar (Fig. 3).

Schließlich ist eine Ziffernanzeige 28 vorgesehen, um die Drehzahl oder die Unwuchtgröße anzuzeigen. Zur Umschaltung der Anzeigetafel 16 von der Drehzahlanzeige auf die Anzeige der Unwucht nach Größe und Richtung ist eine Taste in einem Tastenfeld 30 vorgesehen.

Bei der Durchführung der Unwuchtmessungen in einem Meßlauf wird zunächst auf Drehzahlanzeige geschaltet, wobei in der Ziffernanzeige 28 die Drehzahl und in der Güteanzeige 26 die Güte des Meßsignals angezeigt wird. Wenn eine optimale Güte angezeigt wird, wird durch eine Taste im Tastenfeld 30 die Auswertung der Unwuchtgebersignale eingeleitet, und die Unwucht nach Größe und Richtung wird in der Ziffernanzeige 28 bzw. durch die Punkte 18 angezeigt.

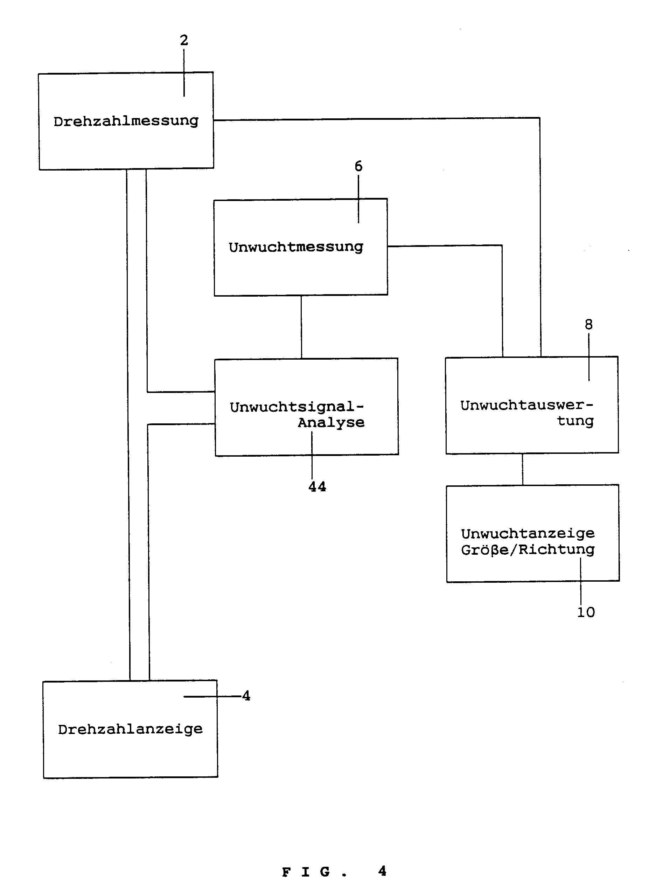

In dem Blockschaltbild von Fig. 4 haben die mit Fig. 1 identischen Blöcke die gleichen Bezugszeichen. Eine Drehzahlmeßschaltung 2 hat einen weiteren Ausgang, über den die Drehzahlsignale an eine Analysatorschaltung 44 gegeben werden, in der wie bei Fig. 1 die Unwuchtgebersignale analysiert werden. Außerdem wird das Drehzahlsignal in der Analysatorschaltung 44 mit dem Gütesignal verknüpft und die optimale Drehzahl gespeichert. Durch Umschalten der Drehzahlanzeigeeinrichtung auf den von der Drehzahlmeßschaltung kommenden Eingang bzw. auf den von der Analysatorschaltung kommenden Eingang kann in der Drehzahlanzeigeeinrichtung wahlweise die aktuelle Drehzahl oder die von der Analysatorschaltung 44 ermittelte optimale Drehzahl angezeigt werden. Die Messung der Unwucht nach Größe und Richtung wird dann bei der optimalen Drehzahl durchgeführt, auf der das Rad während der Messung gehalten wird, was durch Umschalten der Drehzahlanzeigeeinrichtung auf den Eingang von der Drehzahlmeßschaltung kontrolliert wird.

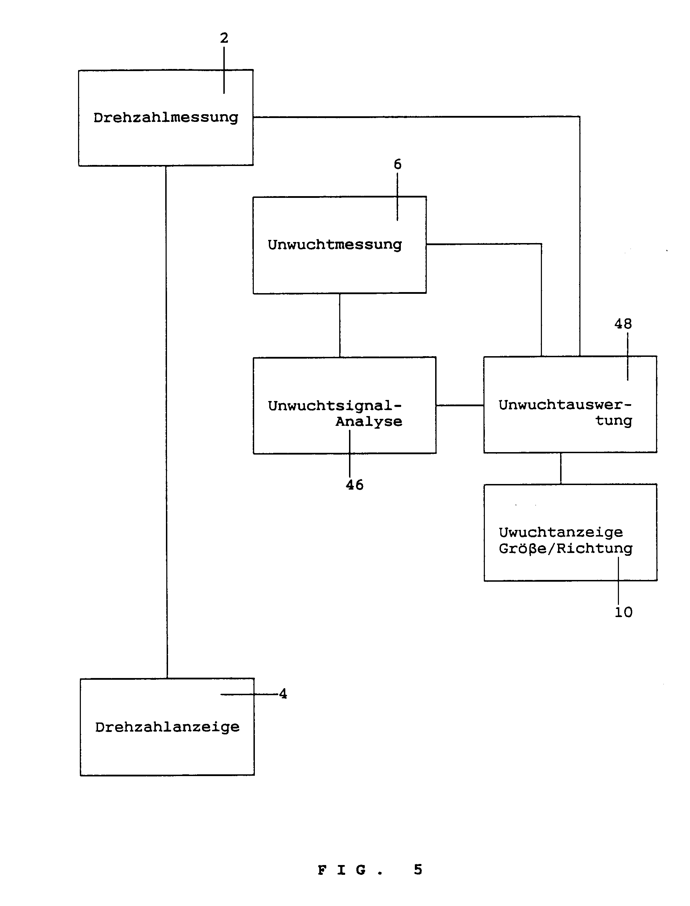

In Fig. 5 haben die Blöcke, die mit Fig. 1 übereinstimmen, die gleichen Bezugszeichen wie in Fig. 1. Das Ausgangssignal des Unwuchtgebers 6 gelangt an eine Analysatorschaltung 46, die direkt mit einer Auswertungsschaltung 48 für die Auswertung der Unwuchtsignale verbunden ist. Dabei steuert die Analysatorschaltung 46 die Auswertungsschaltung 48 derart, daß die Unwuchtsignale nur dann ausgewertet und angezeigt werden, wenn die Güte der Unwuchtgebersignale optimal ist.

Die Analyse der Unwuchtgebersignale in den Analysatorschaltungen 12, 44 und 46 kann dadurch erfolgen, daß die Unwuchtgebersignale mit einer Sinuskurve verglichen werden, wobei eine optimale Güte dann angenommen wird, wenn das Unwuchtgebersignal die geringste Abweichung von der Sinuskurve zeigt. Das Unwuchtgebersignal kann auch in bezug auf seine Amplitude analysiert werden, wobei eine optimale Güte angenommen wird, wenn das Unwuchtgebersignal eine maximale Amplitude hat oder wenn die Amplitude des Unwuchtgebersignals einen vorgegebenen Wert übersteigt. Die Güte des Unwuchtgebersignals kann auch an seinem Signal/Rauschverhältnis gemessen werden, wobei eine optimale Güte des Unwuchtgebersignals dann gegeben ist, wenn das Signal/Rauschverhältnis maximal ist. Die Analyse der Unwuchtgebersignale durch den Vergleich der Unwuchtgebersignale mit einer Sinuskurve, durch Messen der Amplitude oder durch Messen des Signal/Rauschverhältnisses kann dadurch verbessert werden, daß zwei dieser Analysemöglichkeiten oder alle drei miteinander kombiniert werden. Beispielsweise kann eine optimale Güte des Unwuchtgebersignals dann angenommen werden, wenn das Unwuchtgebersignal eine geringe Abweichung von einer Sinuskurve aufweist und das Nutzsignal nicht von einem Störsignal überlagert ist bzw. das Signal/Rauschverhältnis maximal ist.

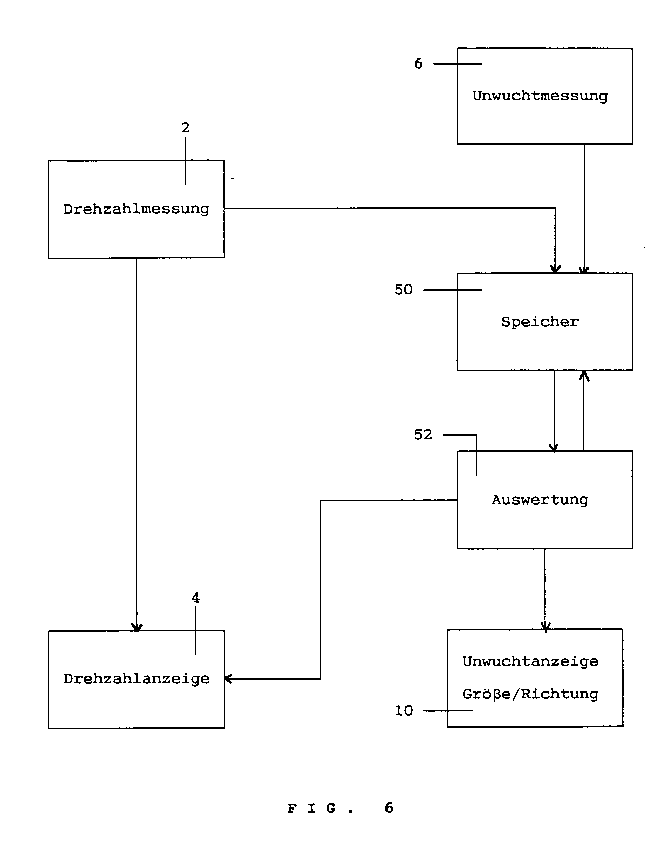

In Fig. 6 haben die Blöcke, die mit Fig. 1 übereinstimmen, die gleichen Bezugszeichen wie in Fig. 1. Die Drehzahlmeßschaltung 2 gibt ihre Ausgangssignale an die Drehzahlanzeigeeinrichtung 4 und an einen Speicher 50 ab. Der Unwuchtgeber 6 gibt seine Ausgangssignale ebenfalls an den Speicher 50 ab. Der Speicher 50 ist mit einer Auswertungseinrichtung 52 verbunden, die die Drehzahlinformation und die Unwuchtinformation aus dem Speicher 50 auslesen und die Auswertungsergebnisse in den Speicher 50 abspeichern kann. In der Auswertungseinrichtung 52 erfolgt einerseits die Bestimmung der Unwucht nach Unwuchtgröße und Richtung und andererseits die statistische Auswertung der Meßergebnisse in bezug auf die "guten" Drehzahlbereiche und die "guten" Unwuchtmeßergebnisse. Die Information über "guten" Drehzahlbereiche wird von der Auswertungseinrichtung 52 an die Drehzahlanzeigeeinrichtung 4 und die Information über die Unwucht nach Unwuchtgröße und -richtung an die Unwuchtanzeige 10 abgegeben.

In der Auswertungseinrichtung 52 werden aus den Unwuchtsignalen von dem Unwuchtgeber 6, die entweder in dem Speicher 50 zwischengespeichert sind oder von dem Unwuchtgeber 6 ohne Zwischenspeicherung in die Auswertungseinrichtung 52 gegeben werden, die Unwuchtgrößen und Unwuchtrichtungen bestimmt. Sodann wird aus den Unwuchtgrößen und den Unwuchtrichtungen je ein erster Mittelwert gebildet, und mindestens ein Extremwert unter den Unwuchtgrößen und mindestens ein Extremwert aus den Unwuchtrichtungen werden aus der weiteren Berechnung ausgeschlossen. Als erster Extremwert wird der Wert aus der weiteren Berechnung ausgeschlossen, der am weitesten von dem ersten Mittelwert abweicht. Als zweiter Extremwert wird der Eckwert ausgeschlossen, der die zweitgrößte Abweichung von dem ersten Mittelwert darstellt. In der Praxis genügt es, wenn ein bis zwei Extremwerte auf diese Weise ausgeschlossen werden.

Nachdem die Extremwerte ausgeschlossen worden sind, wird ein zweiter Mittelwert für Unwuchtgröße und Unwuchtrichtung gebildet, und um diese zweiten Mittelwerte wird ein Toleranzband gelegt, und alle Drehzahlbereiche, deren Unwuchtgröße und Unwuchtrichtung im Toleranzbereich liegen, werden im Speicher als "gut" markiert. Die Breite des jeweiligen Toleranzbandes für Unwuchtgröße und Unwuchtrichtung ist in Abhängigkeit von der Streuung der Unwuchtgröße und Unwuchtrichtung variabel. Beispielsweise wird die Breite des Toleranzbandes so vorgegeben, daß die Breite des Toleranzbandes gleich der Hälfte des Abstandes der Meßwerte ist, die den größten Abstand auf beiden Seiten des zweiten Mittelwertes von diesem Mittelwert haben. Das Toleranzband wird dann so um den zweiten Mittelwert gelegt, daß der zweite Mittelwert in der Mitte des Toleranzbandes liegt. Unwuchtgrößen, die außerhalb des Toleranzbandes für die Unwuchtgröße liegen und Unwuchtrichtungen, die außerhalb des Toleranzbandes für die Unwuchtrichtung liegen, führen bei dieser Auswertung dazu, daß die Drehzahlbereiche, in denen die entsprechenden Unwuchtmessungen liegen, als "nicht gut" klassifiziert werden. Die im Speicher als "gut" markierten Drehzahlbereiche werden auf einer Anzeigeeinheit angezeigt.

Die Unwuchtgrößen und Unwuchtrichtungen der mit "gut" markierten Drehzahlbereiche werden aus dem Speicher 50 ausgelesen, es wird hier ein Mittelwert aus diesen Unwuchtgrößen und Unwuchtrichtungen in der Auswertungseinrichtung 52 gebildet, und diese Mittelwerte für Unwuchtgröße und Unwuchtrichtung aller als "gut" markierten Drehzahlbereiche werden auf der Anzeigeeinrichtung 10 angezeigt. Das Meßergebnis ist demnach eine Anzeige für einen Wert der Unwuchtgröße und einen Wert der Unwuchtrichtung, nach denen das entsprechende Rad dann gewuchtet wird.

Die erste Mittelwertbildung, das Ausschließen von Extremwerten, die zweite Mittelwertbildung und das Aussondern von Drehzahlbereichen durch ein Toleranzband kann unter Berücksichtigung der Unwuchtgrößen und der Unwuchtrichtungen oder nur unter Berücksichtigung der Unwuchtgrößen oder nur unter Berücksichtigung der Unwuchtrichtungen erfolgen, wobei jedoch die Berücksichtigung von Unwuchtgrößen und Unwuchtrichtungen zu der größten Einschränkung in bezug auf die "guten" Drehzahlbereiche führt.

Bei den oben beschriebenen Verfahren wird davon ausgegangen, daß das Rad in einem Meßlauf derart angetrieben wird, daß seine Drehzahl den Drehzahlbereich durchläuft und daß in verschiedenen Drehzahlen Unwuchtgebersignale erzeugt werden. Ein Meßlauf läuft zu diesem Zweck so ab, daß auf der Drehzahlanzeigeeinrichtung 4 die momentane Drehzahl und eine erste Vorgabedrehzahl angezeigt werden, daß bei Erreichen der ersten Vorgabedrehzahl die Unwucht gemessen und gespeichert wird, daß nach der ersten Messung der Unwucht eine zweite Vorgabedrehzahl angezeigt wird, daß bei Erreichen der zweiten Vorgabedrehzahl die Unwucht gemessen und gespeichert wird, und daß dieser Vorgang so lange wiederholt wird, bis der Drehzahlbereich durchgemessen ist. Bei einem Meßlauf werden somit so viele Messungen gemacht, wie Vorgabedrehzahlen über dem Drehzahlbereich verteilt definiert sind.

## Patentansprüche

1. Verfahren zum Bestimmen der Unwucht von am Kraftfahrzeug montierten Kraftfahrzeugrädern, bei dem das Rad angetrieben, die Drehzahl erfaßt und die Unwucht nach Größe und Richtung gemessen und angezeigt wird, **dadurch gekennzeichnet,** daß das Rad in einem Meßlauf derart angetrieben wird, daß seine Drehzahl einen Drehzahlbereich durchläuft, daß bei verschiedenen Drehzahlen Unwuchtgebersignale in bezug auf ihre Güte analysiert werden, und daß das Ergebnis der Analyse angezeigt wird.

2. Verfahren nach Anspruch 1, **dadurch gekennzeichnet,** daß als Ergebnis der Analyse die optimale Drehzahl angezeigt wird, bei der das Unwuchtgebersignal eine maximale Güte hat.

3. Verfahren nach Anspruch 1, **dadurch gekennzeichnet,** daß als Ergebnis der Analyse die Güte der Unwuchtgebersignale beim Meßlauf angezeigt wird.

4. Verfahren zum Bestimmen der Unwucht von am Kraftfahrzeug montierten Kraftfahrzeugrädern, bei dem das Rad angetrieben, die Drehzahl erfaßt und die Unwucht nach Größe und Richtung gemessen und angezeigt wird, **dadurch gekennzeichnet,** daß das Rad in einem Meßlauf derart angetrieben wird, daß seine Drehzahl einen Drehzahlbereich durchläuft, daß bei verschiedenen Drehzahlen Unwuchtgebersignale in bezug auf ihre Güte analysiert werden, und daß mit dem Ergebnis der Analyse die Auswertung der Unwuchtsignale gesteuert wird.

5. Verfahren nach Anspruch 1 oder 4, **dadurch gekennzeichnet,** daß die Unwuchtgebersignale durch Vergleich mit einer Sinuskurve analysiert werden.

6. Verfahren nach einem der Ansprüche 1, 4 oder 5, **dadurch gekennzeichnet,** daß die Unwuchtgebersignale durch Auswertung ihre Amplituden analysiert werden.

7. Verfahren nach einem der Ansprüche 1, 4, 5 oder 6, **dadurch gekennzeichnet,** daß die Unwuchtgebersignale durch Auswertung ihres Signal/Rauschverhältnisses analysiert werden.

8. Verfahren zum Bestimmen der Unwucht von am Kraftfahrzeug montierten Kraftfahrzeugrädern, bei dem das Rad angetrieben, die Drehzahl erfaßt und die Unwucht nach Größe und Richtung gemessen wird, **dadurch gekennzeichnet,** daß das Rad in einem Meßlauf derart angetrieben wird, daß seine Drehzahl einen Drehzahlbereich durchläuft, daß bei verschiedenen Drehzahlen die Unwucht gemessen wird, daß die Drehzahl und die zugehörige Unwucht in Form von Unwuchtsignalen oder in Form von Unwucht und Unwuchtrichtung abgespeichert und nach Beendigung des Meßlaufes statistisch ausgewertet werden.

9. Verfahren nach Anspruch 8, **dadurch gekennzeichnet,** daß aus den Unwuchtgrößen und/oder Unwuchtrichtungen je ein erster Mittelwert gebildet wird, daß mindestens ein Extremwert aus der weiteren Berechnung ausgeschlossen wird, und daß je ein zweiter Mittelwert für Unwuchtgröße und/oder Unwuchtrichtung gebildet werden, daß um diese zweiten Mittelwerte ein Toleranzband gelegt wird und daß alle Drehzahlbereiche, deren Unwuchtgröße und/oder Unwuchtrichtung im Toleranzband liegen, im Speicher als "gut" markiert werden.

10. Verfahren nach Anspruch 9, **dadurch gekennzeichnet,** daß die Breite des jeweiligen Toleranzbandes für Unwuchtgröße und Unwuchtrichtung in Abhängigkeit von der Streuung der Unwuchtgröße und Unwuchtrichtung variabel ist.

11. Verfahren nach Anspruch 9, **dadurch gekennzeichnet,** daß die im Speicher als "gut" markierten Drehzahlbereiche auf einer Anzeigeeinheit angezeigt werden.

12. Verfahren nach Anspruch 9, **dadurch gekennzeichnet,** daß die Unwuchtgrößen und/oder Unwuchtrichtungen der mit "gut" markierten Drehzahlbereiche aus dem Speicher ausgelesen werden, daß je ein Mittelwert aus diesen Unwuchtgrößen und Unwuchtrichtungen gebildet wird und daß diese Mittelwerte für Unwuchtgröße und Unwuchtrichtung aller als "gut" markierten Drehzahlbereiche auf einer Anzeigeeinrichtung angezeigt werden.

13. Verfahren nach einem der Ansprüche 1, 4 oder 8, **dadurch gekennzeichnet,** daß auf einer Anzeigeeinheit die momentane Drehzahl und eine erste Vorgabedrehzahl angezeigt werden, daß bei Erreichen der ersten Vorgabedrehzahl die Unwucht gemessen und gespeichert wird, daß nach der ersten Messung der Unwucht eine zweite Vorgabedrehzahl angezeigt wird, daß bei Erreichen der zweiten Vorgabedrehzahl die Unwucht gemessen und gespeichert wird und daß dieser Vorgang solange wiederholt wird, bis der Drehzahlbereich durchgemessen ist.

## Claims

1. Method for determining the imbalance of wheels mounted on vehicles, in which the wheel is driven, the rotational speed is recorded and the extent and direction of the imbalance are mesured and displayed, characterised in that the wheel is driven in a measuring run such that its rotational speeds pass through a rotational speed range, in that if the rotational speeds vary the value of imbalance emitter signals is analysed, and in that the analysis result is displayed.

2. Method according to Claim 1, characterised in that the optimum rotational speeds at which the imbalance emitter signal has a maximum value, are displayed as the analysis result.

3. Method according to Claim 1, characterised in that the value of the imbalance signals in the measuring run is displayed as the analysis result.

4. Method for determining the imbalance of wheels mounted on vehicles, in which the wheel is driven, the rotational speeds are recorded and the extent and direction of the imbalance are measureed and displayed, characterised in that the wheel is driven in a measuring run such that its rotational speeds pass through a rotational speed range, in that if the rotational speeds vary the value of the imbalance emitter signals is analysed, and in that the evaluation of the imbalance signals is controlled by means of the analysis result.

5. Method according to Claim 1 or Claim 4, characterised in that the imbalance signals are analysed by comparison with a sine curve.

6. Method according to any one of Claims 1, 4, or 5, characterised in that the imbalance emitter signals are analysed by evaluation of their amplitudes.

7. Method according to any one of Claims 1, 4, 5, or 6, characterised in that the imbalance emitter signals are analysed by evaluation of their signal/noise ratio.

8. Method for determining the imbalance of wheels mounted on vehicles, in which the wheel is driven, the rotational speeds are recorded and the extent and direction of the imbalance are measured and displayed, characterized in that the wheel is driven in a measuring run such that its rotational speeds pass through a rotational speed range, in that if the rotational speeds vary the imbalance is measured, in that the rotational speeds and the associated imbalance are stored in the form of imbalance signals or in the form of the extent and direction of imbalance, and are evaluated statistically after the measuring run has ended.

9. Method according to Claim 8, characterised in that a first mean value is obtained from the extents of imbalance and/or directions of imbalance, in that at least one extreme value is excluded from the further calculation, and in that a second mean value is obtained from the extents of imbalance and/or directions of imbalance, in that a tolerance band is allocated to these second mean values, and in that all the rotational speed ranges of which the extent of imbalance and/or direction of imbalance are within the tolerance band, are recorded as "satisfactory" in the memory.

10. Method according to Claim 9, characterised in that the width of each tolerance band for the extent of imbalance and direction of imbalance is variable according to the dispersion of the extent of imbalance and direction of imbalance.

11. Method according to Claim 9, characterised in that the rotational speed ranges recorded as "satisfactory" in the memory are displayed on a display unit.

12. Method according to Claim 9, characterised in that the extents of imbalance and/or directions of imbalance of the rotational speed ranges recorded as "satisfactory" are read from the memory, in that a mean value is obtained from these extents of imbalance and directions of imbalance in each case, and in that these mean values for extents of imbalance and direction of imbalance of all the rotational speed ranges recorded as "satisfactory" are displayed on a display unit.

13. Method according to any one of Claims 1, 4 or 8, characterised in that the instantaneous rotational speeds and a first predetermined rotational speed figure is displayed on a display unit, in that when the first predetermined rotational speed figure has been obtained, the imbalance is measured and stored, and in that after the first measurement of the imbalance is completed, a second predetermined rotational speed figure is displayed, in that when the second standard rotational speed figure has been obtained, the imbalance is measured and stored, and this process is repeated for as long as the rotational speed range is measured.

## Revendications

1. Procédé pour la détermination du balourd de roues montées sur un véhicule, dans lequel la roue entraînée saisit le nombre de tours et le balourd est mesuré et affiché selon l'importance et la direction, caractérisé en ce que la roue est entraînée sur un parcours de mesuré de telle manière que son nombre de tours effectue une plage de nombres de tours et en ce que pour différents nombres de tours des signaux de balourd sont analysés qualitativement et en ce que le résultat de l'analyse est affiché.

2. Procédé selon la revendication 1, caractérisé en ce qu'en tant que résultat de l'analyse, on affiche le nombre de tours optimum pour lequel le signal d'émetteur de balourd possède la qualité maximum.

3. Procédé selon la revendication 1, caractérisé en ce qu'en tant que résultat de l'analyse, on affiche la qualité des signaux d'émetteur de balourd pour le parcours de mesure.

4. Procédé pour la détermination du balourd de roues montées sur véhicule, dans lequel la roue entraînée saisit le nombre de tours et le balourd est mesuré et affiché en fonction de l'importance et de la direction, caractérisé en ce que la roue est entraînée sur un parcours de mesure de telle façon que son nombre de tours parcourt une plage de nombres de tours, en ce que pour différents nombres de tours des signaux d'émetteur de balourd sont analysés qualitativement et en ce qu'avec le résultat de l'analyse on commande l'évaluation des signaux de balourd.

5. Procédé selon la revendication 1 ou 4, caractérisé en ce que les signaux d'émetteur de balourd sont analysés par comparaison avec une sinusoïde.

6. Procédé selon l'une des revendications 1, 4 ou 5, caractérisé en ce que les signaux d'émetteur de balourd sont analysés par évaluation de leur amplitude.

7. Procédé selon l'une des revendications 1, 4, 5 ou 6, caractérisé en ce que les signaux d'émetteur de balourd sont analysés par évaluation de leur rapport signal/bruit.

8. Procédé pour la détermination du balourd de roues montées sur véhicule, dans lequel la roue entraînée saisit le nombre de tours et le balourd est mesuré selon l'importance et la direction, caractérisé en ce que la roue est entraînée sur un parcours de mesure de telle manière que son nombre de tours parcourt une plage de nombres de tours, en ce que le balourd est mesuré pour différents nombres de tours, en ce que le nombre de tours et le balourd correspondant sont mis en mémoire sous forme de signaux de balourd ou sous forme de grandeur de balourd et de direction de balourd et sont évalués statistiquement à la fin du parcours de mesure.

9. Procédé selon la revendication 8, caractérisé en ce qu'à partir des valeurs de balourd et/ou des directions de balourd, on forme respectivement une première valeur moyenne, en ce qu'au moins une valeur extrême est exclue de la suite du calcul et en ce que respectivement une deuxième valeur moyenne est formée pour la grandeur de balourd et/ou la direction de balourd, en ce que pour ces deuxièmes valeurs moyennes est fixée une plage de tolérances et en ce que toutes les plages de nombres de tours dont les grandeurs de balourd et/ou la direction de balourd se situent dans la plage de tolérances sont désignées en mémoire par la caractéristique "satisfaisantes".

10. Procédé selon la revendication 9, caractérisé en ce que la largeur de la plage de tolérances respective pour la grandeur de balourd et la direction de balourd est variable en fonction de la dispersion de la grandeur de balourd et de la direction de balourd.

11. Procédé selon la revendication 9, caractérise en ce que les plages de nombres de tours désignées en mémoire comme "satisfaisantes" sont affichées sur une unité d'affichage.

12. Procédé selon la revendication 9, caractérisé en ce que les grandeurs de balourd et/ou les directions de balourd des plages de nombres de tours marquées "satisfaisantes" sont lues à partir de la mémoire et en ce que respectivement une valeur moyenne est formée à partir de ces grandeurs de balourd et directions de balourd et en ce que ces valeurs moyennes pour grandeur de bolourd et direction de balourd de toutes les plages de nombres de tours marquées "satisfaisantes" sont affichées sur un dispositif d'affichage.

13. Procédé salon l'une dos revendications 1, 4 ou 8, caractérisé en ce que sur une unité d'affichage sont affichés le nombre de tours momentané et un premier nombre de tours préétabli, en ce que pour atteindre le premier nombre de tours préétabli on mesure le balourd et on le met en mémoire, en ce qu'après la première mesure du balourd on affiche un deuxième nombre de tours préétabli, en ce que lorsque le deuxième nombre de tours préétabli est atteint, on mesure le balourd et on le met en mémoire et en ce que l'on répète ce processus juaqu'à ce que la plage de nombres de tours ait été entièrement mesurée.
